# EUROPÄISCHE PATENTSCHRIFT

(11) **EP 1 737 714 B1**
(45) Veröffentlichungstag und Bekanntmachung des Hinweises auf die Patenterteilung: **20.08.2008**
(21) Anmeldenummer: 05708002.0
(22) Anmeldetag: 11.02.2005
(51) Int. Cl.: B60S 1/40

(54) **ADAPTER ZUM GELENKIGEN VERBINDEN EINES WISCHBLATTS MIT EINEM WISCHARM**
ADAPTER FOR HINGEDLY CONNECTING A WIPER BLADE TO A WIPER ARM
ADAPTATEUR SERVANT A RELIER DE MANIERE ARTICULEE UN BALAI D'ESSUIE-GLACE AVEC UN BRAS D'ESSUIE-GLACE

(30) Priorität: 10.04.2004 DE 102004017722
(43) Veröffentlichungstag der Anmeldung: 03.01.2007
(73) Patentinhaber: ROBERT BOSCH GMBH, 70442 Stuttgart (DE)
(72) Erfinder: OP'T ROODT, Inigo, B-3500 Hasselt (BE)
(86) Internationale Anmeldenummer: PCT/EP2005/050607
(87) Internationale Veröffentlichungsnummer: WO 2005/097570

(56) Entgegenhaltungen:
- WO-A-03/051688
- DE-A1- 2 604 325

## Beschreibung

### Stand der Technik

Die Erfindung geht von einem Adapter zum gelenkigen Verbinden eines Wischblatts mit einem Wischarm nach dem Oberbegriff des Anspruchs 1 aus.

Bekannte Scheibenwischer weisen einen Wischarm auf, der auf einer Wischerwelle sitzt. Diese wird von einem Wischermotor angetrieben. Mit dem freien Ende des Wischarms ist ein Wischblatt gelenkig verbunden. Es besitzt in der Regel ein mehrgliederiges Tragbügelsystem mit einem Hauptbügel. An diesem sind untergeordnete Bügel angelenkt, von denen zumindest einige mit Krallen an ihren Enden eine Wischleiste halten. Es sind auch gelenklose Wischblätter bekannt, die anstelle des Tragbügelsystems ein senkrecht zur Fahrzeugscheibe federndes, elastisches Tragelement besitzen, das aus Kunststoff herge-stellt ist. Um die Federeigenschaft zu verbessern, kann es mindestens eine Federschiene aus Federstahl aufweisen. Das Tragelement besitzt im unbelasteten Zustand eine stärkere Krümmung als die Fahrzeugscheibe, sodass sich die Wischleiste unter der Anpresskraft des Wischarms mit einer geeigneten Druckverteilung an die Fahrzeugscheibe anlegt.

Aus der DE 101 62 402 A1 ist ein Scheibenwischer mit einem Wischblatt mit einem Hauptbügel bekannt, der über ein so genanntes "Sidelock-System" an einem Wischarm angelenkt ist. Hierzu ist ein Stift seitlich an dem freien Ende des Wischarms vernietet, der ein zur Fahrzeugscheibe hin offenes, u-förmiges Profil aufweist. Der Stift zeigt quer zur Längsrichtung des Wischarms und zu dem Wischblatt hin. Er wird bei der Montage des Wischblatts in eine Durchgangsbohrung eines Adapters geschoben, der zuvor in zwei einander gegenüberliegenden Durchzügen in den Seitenwänden eines Einhängekastens des Wischblatts eingesetzt ist. Hierzu besitzt der Adapter ein im Wesentlichen zylindrisches Lagerelement, das mindestens einen Längsschlitz und an seinen Enden Führungsflächen aufweist, mit denen er in den Durchzügen des Einhängekastens drehbar gelagert ist. Der Schlitz ermöglicht es dem Lagerelement, radial elastisch nachzugeben und sich nach dem Durchgang durch die Durchzüge wieder zu spreizen. Somit kann das Lagerelement zwischen Rasthaken an einem ersten Ende und einer Anlagefläche an seinem zweiten Ende axial im Einhängekasten fixiert werden. Ist der Stift in die Durchgangsbohrung eingeschoben, kann das Lagerelement nicht mehr radial nachgeben, sodass der Adapter sich nicht mehr aus dem Einhängekasten lösen kann. Um eine Relativdrehung zwischen dem Stift und dem Adapter zu vermeiden, besitzt der Adapter an seinem zweiten Ende einen Klipp mit einer Rastnase, die an einem Schenkel des u-förmigen Profils des Wischarms bei der Montage verrastet. Diese wird dadurch erschwert, dass die Rastnase auf den Schenkel des u-förmigen Profils ausgerichtet werden muss. Ferner findet die Relativbewegung zwischen den relativ schmalen Führungsflächen und den geringen Wandstärken der Durchzüge statt, was eine hohe Flächenbelastung der Gelenkflächen zur Folge hat.

Parallel zum Stift ist am Wischarm in Längsrichtung versetzt eine Brücke angeordnet, die an ihrem freien Ende zur Seite des Stifts hin abgewinkelt ist. In einer Montageposition, in der das Wischblatt quer zur Längsrichtung des Wischarms gehalten wird, kann der Stift in die Durchgangsbohrung des Adapters geschoben werden. Wird das Wischblatt anschließend in die Längsrichtung des Wischarms gedreht, übergreift die Brücke das Wischblatt und verriegelt es mit ihrem abgewinkelten Ende, sodass das Wischblatt im montierten Zustand auf dem Stift zwischen dem abgewinkelten Ende der Brücke und dem Wischarm geführt ist.

Ferner ist aus der DE 101 62 397 A1 ein ähnlicher Scheibenwischer mit einem Wischblatt mit einem Hauptbügel bekannt, der über ein so genanntes "Sidelock-System" an einem Wischarm angelenkt ist. Der zylindrische Adapter wird in die Durchzüge eingepresst, bis er mit einem Kragen an einem Ende an der Außenseite des Einhängekastens anliegt. Da der Adapter im Wischblatt fest sitzt, findet die Relativbewegung zwischen dem Adapter einerseits und dem Wischarm bzw. seinem Stift andererseits statt. Ferner werden die Teile des Wischarms und des Wischblatts, die in der Regel aus Metallblech gefertigt sind, durch den Adapter aus Kunststoff gegeneinander isoliert, sodass die Bewegungsgeräusche und der Verschleiß minimiert werden.

Um zu gewährleisten, dass das abgewinkelte Ende der Brücke im montierten Zustand mit geringem Spiel an der zugeordneten Außenseite des Einhängekastens gleiten kann, ist auf dieser Seite eine Platte aus Kunststoff befestigt. Diese weist auf der Seite, die dem Einhängekasten zugewandt ist, Aussparungen für die Ränder der Durchzüge und für den Überstand des Gelenkbolzens auf. Ferner ist im Bereich des Stifts eine Ausnehmung vorgesehen, sodass der Stift und ggf. der Adapter ein kurzes Stück über den zugeordneten Durchzug bzw. seinen Rand vorstehen können. Die Platte gleicht die Unebenheiten auf der Außenseite des Einhängekastens aus, sodass das abgewinkelte Ende der Brücke eine glatte Anlagefläche vorfindet. Die Platte kann am Einhängekasten angeschraubt, angenietet, angeklebt oder angeklippst sein. Wenn Schrauben oder Niete verwendet werden, sollten sie in vorteilhafter Weise einen Senkkopf aufweisen. Durch die Platte erhöht sich die Anzahl der Bauteile.

### Vorteile der Erfindung

Nach der Erfindung besitzt der Klipp eine Rastnase, die in Richtung des Lagerelements weist und bei Montage an einem Rand der zugeordneten Seitenwand des Einhängekastens verrastet. Somit ist der Adapter drehfest mit dem Einhängekasten verbunden, sodass zwischen den Durchzügen und dem Umfang des Lagerteils in vorteilhafter Weise keine relative Drehbewegung entsteht. Die für das Gelenk erforderliche Drehbewegung findet ausschließlich zwischen der Lagerbohrung des Adapters und dem Stift des Wischarms statt. Hier können die Lagerflächen so groß dimensioniert werden, dass kein nennenswerter Verschleiß auftritt. Sollte dennoch der Adapter ausgewechselt werden müssen, ist dies leicht möglich, indem der Klipp gelöst und der Adapter aus den Durchzügen herausgezogen wird. Ferner braucht der Adapter bei der Montage des Wischblatts am Wischarm nicht mehr auf den Wischarm ausgerichtet werden.

Bei einer Ausgestaltung der Erfindung ist das zweite Ende des Lagerelements an einer Kappe angeformt, die mit einer Anlagefläche im montierten Zustand an der zugeordneten Seitenwand des Einhängekastens anliegt und mindestens einen Klipp aufweist. Die Kappe kann mehrere Funktionen erfüllen. Sie sichert zunächst das Lagerelement gegen Verdrehen in den Durchzügen und deckt außerdem die Durchzüge und den Gelenkbolzen an der äußeren Seitenwand ab, sodass diese gegen Nässe und Verschmutzung geschützt sind. Ferner kann die Kappe an ihrer Außenseite eine Anlagefläche für ein abgewinkeltes Ende einer Brücke eines Wischarms besitzen. Dies erleichtert die Montage des Wischblatts und ermöglicht engere Toleranzen in axialer Richtung des Stifts, sodass das Wischblatt besser auf dem Stift des Wischarms geführt ist.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine Explosionsdarstellung einer Gelenkverbindung zwischen einem Wischarm und einem Wischblatt,
Fig. 2 eine perspektivische Ansicht einer Varianten eines Adapters nach Fig. 1 und
Fig. 3 eine perspektivische Darstellung einer Gelenkverbindung mit einem Adapter nach Fig. 2 im montierten Zustand.

### Beschreibung der Ausführungsbeispiele

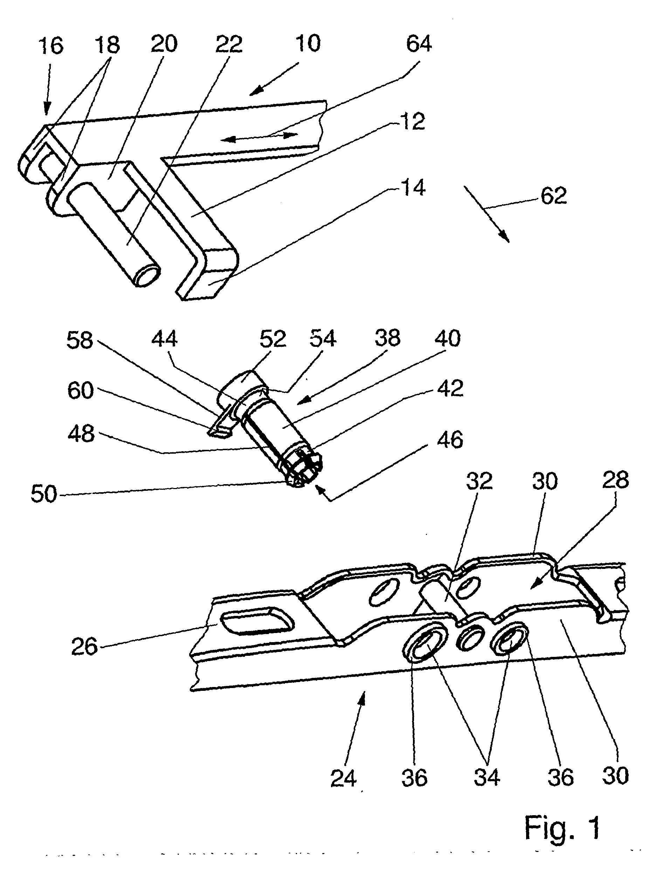

Von einem Scheibenwischer sind nur die Teile eines Wischarms 10 und eines Wischblatts 24 (Fig. 1) dargestellt, so weit es für das Verständnis der Erfindung notwendig ist. Der Wischarm 10 besitzt ein u-förmiges Profil 16, an dessen Schenkeln 18 seitlich, quer zur Längsrichtung 64 und zum Wischblatt 24 zeigend ein Stift 22 befestigt ist, sodass das Wischblatt 24 nach dem Sidelock-System montiert werden kann. Ferner ist am freien Ende des Wischarms 10 eine Brücke 12 angeformt, welche parallel zum Stift 22 und in Längsrichtung 64 relativ zu diesem versetzt angeordnet ist und ein abgewinkeltes Ende 14 aufweist. Das Wischblatt 24 besitzt ein Tragbügelsystem, von dem ein Hauptbügel 26 dargestellt ist. Dieser besitzt einen Einhängekasten 28, dessen Seitenwände 30 durch einen Gelenkbolzen 32 miteinander verbunden sind. Außerdem sind zu beiden Seiten des Gelenkbolzens 32 in Längsrichtung 64 versetzt in den Seitenwänden 30 jeweils zwei einander gegenüber liegende Durchzüge 34 angeordnet.

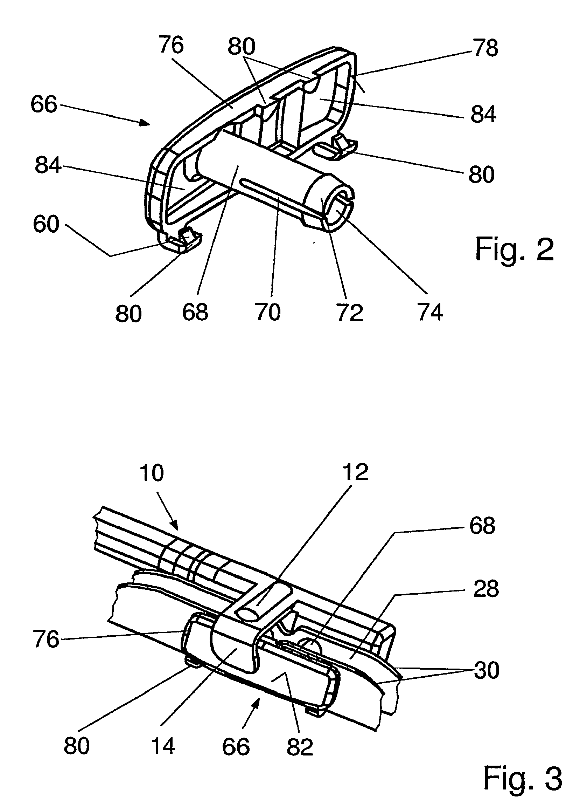

Das Wischblatt 24 wird mithilfe eines Adapters 38 mit dem Wischarm 10 gelenkig verbunden. Der Adapter 38 ist ein im Wesentlichen zylindrisches Bauteil (Fig. 2) mit einem Lagerelement 40, an das sich an beiden Enden Führungsflächen 42, 44 anschließen. Die zum Wischarm 10 weisende Führungsfläche 44 wird von einem Kragen 52 mit einer axial wirkenden Anlagefläche 54 begrenzt. Am Umfang des Kragens 52 ist ein Klipp 58 mit einer Rastnase 60 angeformt, die zum Wischblatt 24 weist. Die Führungsfläche 42 am anderen Ende des Adapters 38 wird nach außen hin von Rasthaken 50 begrenzt, die das Ende von Federzungen bilden. Diese sind durch Längsschnitte 48, die über den Umfang verteilt sind, im Bereich der Führungsfläche 42 und der Rasthaken 50 hergestellt. Ein oder mehrere Längsschlitze 48 reichen bis über das Lagerelement 40 hinaus, sodass auch der Außendurchmesser des Lagerelements 40 zur Montage vorübergehend auf den Innendurchmesser der Durchzüge 34 reduziert werden kann. Die Längsschlitze 48 reichen in radialer Richtung von der äußeren Umfangsfläche bis zu einer Durchgangsbohrung 46, die sich in axialer Richtung durch den Adapter 38 erstreckt.

Bei der Montage des Wischblatts 24 wird der Adapter 38 in Montagerichtung 62 in ein Paar der Durchzüge 34 gedrückt, wobei sich der äußere Umfang der Rasthaken 50 dem inneren Durchmesser der Durchzüge 34 anpasst. Das Gleiche gilt für das Lagerelement 40 in Bezug auf den in Montagerichtung 62 ersten Durchzug 34. Die Rasthaken 50 spreizen sich wieder, sobald sie den in Montagerichtung 62 zweiten Durchzug 34 passiert haben. In dieser Position spreizt sich auch das Lagerelement 40. Das Wischblatt 24 wird auf dem Adapter 38 zwischen der Anlagefläche 54 des Kragens 52 und den Rasthaken 50 axial fixiert, die jeweils an nach außen gerichteten Rändern 36 der Durchzüge 34 anliegen. Um den Adapter 38 gegen Verdrehen in den Durchzügen 34 zu sichern, verrastet der Klipp 58 mit seiner Rastnase 60 an einem Rand der zugeordneten Seitenwand 30 des Eingängekastens 28.

Das Wischblatt 24 wird mit dem montierten Adapter 38 um eine Längsachse des Adapters 38 um 90° zur Längsrichtung 64 des Wischarms 10 gedreht, um den Stift 22 des Wischarms 10 in die Durchgangsbohrung 46 des Adapters 38 schieben zu können. Wird das Wischblatt 24 nun auf dem Stift 22 in seine Ausgangslage parallel zur Längsrichtung 64 des Wischarms 10 zurückgedreht, übergreift die Brücke 12 den Einhängekasten 28 des Wischarms 10 und sichert das Wischblatt 24 auf dem Stift 22 in axialer Richtung zwischen seinem abgewinkelten Ende 14 und einer Anlagefläche 20 am inneren Schenkel 18 des u-förmigen Profils 16. Da die relative Drehbewegung des Gelenks nur zwischen dem Stift 22 und dem Adapter 38 stattfindet, ergeben sich große, gering belastete Lagerflächen mit einer großen Lebensdauer. Außerdem ist der Adapter 38 einfach zu montieren und kann bei Verschleiß leicht ausgetauscht werden.

Bei einer Ausführung eines Adapters 66 nach Fig. 2 ist an einem im Wesentlichen zylindrischen Lagerelement 68 an dem ersten Ende ein Rasthaken 72 vorgesehen, während an dem zweiten Ende eine Kappe 76 angeformt ist. Die Kappe 76 erstreckt sich in Längsrichtung des Wischblatts 24 über den Bereich der Durchzüge 34 und des Gelenkbolzens 32 und deckt die Durchzüge 34 sowie ihre nach außen vorstehenden Ränder 36 nach außen ab. Die Ränder 36 sowie das unter Umständen vorstehende Ende des Gelenkbolzens 32 finden Platz in Aussparungen 84 der Kappe 76. An dem Rand der Aussparungen 84 besitzt die Kappe 76 eine Anlagefläche 78, mit der sie an der Außenseite der zugeordneten Seitenwand 30 des Einhängekastens 28 anliegt. Die seitlichen Durchzüge 34 werden somit gegen Feuchtigkeit und Schmutz geschützt.

Das Lagerelement 68 besitzt auf den Umfang verteilt mehrere Längsschlitze 70, die sich radial von einer Lagerbohrung 74 für den Stift 22 bis zum äußeren Umfang erstrecken. Dadurch kann der äußere Durchmesser der Rasthaken 72 auf den inneren Durchmesser der Durchzüge 34 zusammengedrückt werden. Sobald die Rasthaken 72 die Durchzüge 34 passiert haben, spreizt sich das Lagerelement 68 wieder, wodurch der Adapter 66 zwischen der Anlagefläche 78 und den Rasthaken 72 am Einhängekasten fixiert ist. Zusätzlich besitzt die Kappe 76 an ihrem dem Einhängekasten 28 zugewandten Rand Klippse 80, mit denen der Adapter 66 bei der Montage an den Rändern der zugeordneten Seitenwand 30 des Einhängekastens 28 einrastet und somit das Lagerelement 68 gegen Verdrehen sichert. Auf der dem Lagerelement 68 abgewandten Seite der Kappe 76 ist eine Anlagefläche 82 für das abgewinkelte Ende 14 der Brücke 12 vorgesehen. Durch die glatte Fläche ist eine einfache Montage des Wischblatts 24 am Wischarm 10 möglich. Ferner kann das abgewinkelte Ende 14 mit einem geringen Spiel zur Anlagefläche 82 ausgeführt werden. Auf Grund der geringen Toleranzen ergibt sich eine gute Führung zwischen dem Wischarm 10 und dem Wischblatt 24. Schließlich verbessert die nach außen geschlossene Kappe 76 den optischen Eindruck der Gelenkverbindung.

## Patentansprüche

1. Adapter (38, 66) zum gelenkigen Verbinden eines Wischblatts (24) mit einem Wischarm (10) nach dem Sidelock-System, wobei der Adapter (38, 66) ein im Wesentlichen zylindrisches, längs geschlitztes Lagerelement (40, 68) besitzt, das in Durchzüge (34) in Seitenwänden (30) eines Eingängekastens (28) des Wischblatts (24) einsetzbar und mittels Rasthaken (50) an einem ersten Ende am Rande eines Durchzugs (34) fixierbar ist, während sein zweites Ende mit einer Anlagefläche (54, 78) verbunden ist, die an der Außenseite der gegenüberliegenden Seitenwand (30) anliegt und gegen Verdrehen durch mindestens einen Klipp (58, 80) gesichert ist, **dadurch gekennzeichnet, dass** der Klipp (58, 80) eine Rastnase (60) besitzt, die in Richtung des Lagerelements weist und bei der Montage an einem Rand der zugeordneten Seitenwand (30) des Eingängekastens (28) verrastet.

2. Adapter (66) nach Anspruch 1, **dadurch gekennzeichnet, dass** das zweite Ende an einer Kappe (76) angeformt ist, die mit einer Anlagefläche (78) im montierten Zustand an der zugeordneten Seitenwand (30) anliegt und mindestens einen Klipp (80) aufweist.

3. Adapter (66) nach Anspruch 2, **dadurch gekennzeichnet, dass** die Kappe (76) an ihrer Außenseite eine Anlagefläche (82) für ein abgewinkeltes Ende (14) einer Brücke (12) des Wischarms (10) besitzt.

4. Adapter (66) nach Anspruch 2 oder 3, **dadurch gekennzeichnet, dass** die Kappe (76) auf der Seite des Lagerelements (68) Aussparungen (84) besitzt und im montierten Zustand die Durchzüge (34) in der äußeren Seitenwand (30) und einen Gelenkbolzen (32) nach außen abdeckt.

## Claims

1. Adapter (38, 66) for hingedly connecting a wiper blade (24) to a wiper arm (10) by the sidelock system, wherein the adapter (38, 66) has a substantially cylindrical, longitudinally slotted bearing element (40, 68) which can be inserted into eyelets (34) in side walls (30) of a mounting box (28) of the wiper blade (24) and can be fixed at a first end to the edge of an eyelet (34) by means of latching hooks (50) while its second end is connected to a bearing surface (54, 78) which bears against the outside of the opposite side wall (30) and is secured against rotation by means of at least one clip (58, 80), **characterized in that** the clip (58, 80) has a latching lug (60) which points in the direction of the bearing element and, during installation, latches on an edge of the associated side wall (30) of the mounting box (28).

2. Adapter (66) according to Claim 1, **characterized in that** the second end is integrally formed on a cap (76) which, in the fitted state, bears with a bearing surface (78) against the associated side wall (30) and has at least one clip (80).

3. Adapter (66) according to Claim 2, **characterized in that** the outer side of the cap (76) has a bearing surface (82) for an angled end (14) of a bridge (12) of the wiper arm (10).

4. Adapter (66) according to Claim 2 or 3, **characterized in that** the cap (76) has cutouts (84) on the side towards the bearing element (68) and, in the fitted state, outwardly covers the eyelets (34) in the outer side wall (30) and a hinge pin (32).

## Revendications

1. Adaptateur (38, 66) pour relier de manière articulée un balai d'essuie-glace (24) à un bras d'essuie-glace (10) selon le système du verrouillage latéral,
l'adaptateur (38, 66) ayant un élément de palier (40, 68) principalement cylindrique, fendu longitudinalement, qui se place dans des passages (34) des parois latérales (30) d'un boîtier d'accrochage (28) du balai d'essuie-glace (24) en se bloquant à l'aide de crochets d'enclipsage (50) contre une première extrémité au bord d'un passage (34) alors que sa seconde extrémité est reliée à une surface d'appui (54, 78), qui vient contre le côté extérieur de la paroi latérale opposée (30) et est fixée en rotation par au moins un élément d'enclipsage (58, 80),
**caractérisé en ce que**
l'élément d'enclipsage (58, 80) comporte un bec d'enclipsage (60) tourné en direction de l'élément de palier et qui pour le montage, s'accroche contre un bord de la paroi latérale (30) associée du boîtier d'accrochage (28).

2. Adaptateur (66) selon la revendication 1,
**caractérisé en ce que**
la seconde extrémité comporte un capuchon (76), formé sur celle-ci, et qui s'appuie par une surface d'appui (78) à l'état monté contre la paroi latérale correspondante (30) et comporte au moins un élément d'enclipsage (80).

3. Adaptateur (66) selon la revendication 2,
**caractérisé en ce que**
le capuchon (76) possède sur son côté extérieur, une surface d'appui (82) pour une extrémité repliée (14) d'un pontet (12) du bras d'essuie-glace (10) .

4. Adaptateur (66) selon les revendications 2 ou 3,
**caractérisé en ce que**
le capuchon (76) possède des dégagements (84) sur le côté de l'élément de palier (68) et à l'état monté, les passages (34) de la paroi latérale extérieure (30) et d'un goujon d'articulation (32) sont couverts côté extérieur par ce capuchon.
